# EUROPEAN PATENT SPECIFICATION

(11) **EP 1 059 162 B1**
(45) Date of publication and mention of the grant of the patent: **04.04.2007**
(21) Application number: 00111629.2
(22) Date of filing: 31.05.2000
(51) Int. Cl.: B32B 27/00, B32B 29/00, B32B 27/36, B65D 5/40

(54) **Packaging laminate having barrier properties, method of producing same and packaging containers prepared therewith**
Verpackungsverbundmaterial mit Barriereeigenschaften, Verfahren zu seiner Herstellung sowie daraus hergestellter Verpackungsbehälter
Matériau stratifié pour l'emballage possédant des propriétés de barrière aux gaz, son procédé de fabrication et les articles d'emballages obtenus à partir de ce matériau

(30) Priority: 07.06.1999 SE 9902112
(43) Date of publication of application: 13.12.2000
(73) Proprietor: Tetra Laval Holdings & Finance SA, 1009 Pully (CH)
(72) Inventor: Jonsson, Eva J., 233 33 Svedala (SE); Oveby, Claes, 232 51 Akarp (SE); Asplund, Kjell, 247 36 Södra Sandby (SE); Persson, Fredrik, 234 33 Lomma (SE); Andersson, Anders S., 260 21 Billerberga (SE)
(74) Representative: Persson, Eva Kerstin Ch.

(56) References cited:
- EP-A- 0 865 908
- WO-A-95/23063
- US-A- 6 007 902

## Description

### TECHNICAL FIELD

The present invention relates to a laminated packaging material for packaging of liquid food products, comprising a core layer and a barrier layer, the barrier layer consisting of a liquid crystal polymer (LCP).

The present invention also relates to a method of manufacturing the laminated packaging material of the invention as well as to a packaging container produced of the laminated packaging material.

### BACKGROUND ART

The use of polymers in package materials have increased during the last years due to the advantages of the plastic materials compared to other package materials, such as glass, metal etc. The polymer materials exhibit relatively low raw material and production costs, quick and simple production processes, low weight, and advantageous appearance. The use of single layer polymers has however mostly a disadvantage; a high permeability of gases and solvents. Metal and glass packages have therefore been able to maintain a large fraction of the food package market that requires good barrier properties against humidity, solvents, oxygen etc. A way of solving these barrier problems has been to apply coextrusion of different plastics, where the combination of the best properties of the different polymers are used to optimise the package material regarding barrier function and costs.

Within the packaging industry, it is well known to employ laminated packaging material of a single-use nature for the packaging and transport of liquid foods. Normally, such laminated packaging materials are built-up from a configurationally rigid but foldable core layer consisting, for example, of paper or paperboard in order to achieve good mechanical configurational stability. Liquid-tight coatings of plastic are applied on both sides of the core layer and effectively protect the core layer of liquid-absorbing fibres against penetration by moisture. These outer layers normally consist of thermoplastics, preferably polyethylene, which moreover imparts excellent thermosealing properties to the packaging material, whereby the packaging material may be converted into finished packages possessing the desired geometric configuration.

Laminated packaging materials consisting solely of paper or paperboard and liquid-tight plastic lack, however, barrier properties vis-à-vis gases, in particular oxygen gas. This is a major drawback in the packing of many foods, whose shelf-life, flavour and nutrient content dramatically deteriorate in contact with oxygen gas. One example of such foods is fruit juices whose vitamin C content declines when they are exposed to oxygen gas.

In order to provide packaging materials with gas barrier properties, in particular towards oxygen gas, it is known to apply a layer of, for example aluminium foil ('Al-foil'), EVOH (ethylene vinyl alcohol) or PVOH (polyvinyl alcohol), on that side of the core layer which is intended to be turned to face towards the interior of the finished package.

By using such laminated packaging materials, it is, thus, possible to produce packaging containers for so called "extended shelf life" (ESL) and aseptic packaging.

However, the known gas barrier materials suffer from certain drawbacks. For example, in certain cases from the points of view of cost, the environment and recycling, it has been deemed appropriate to replace Al-foil as the gas barrier material in food packages. On the other hand, barrier polymers such as EVOH and PVOH, respectively are highly sensitive to moisture and rapidly lose their barrier properties towards oxygen gas when they are exposed to high relative humidity. This, among other things, make it necessary to surround gas barrier layers of EVOH and PVOH with layers of another polymer, for instance polyethylene, which is impervious to moisture. Alternatively, EVOH and PVOH, respectively, may be combined with one or more known polymers for forming a continuous, well-integrated layer possessing superior gas barrier properties which are also retained at high surrounding moisture content. However, the manufacture of packaging materials including gas barrier layers with EVOH and PVOH, respectively, entails high costs for both material and for the production of the requisite multilayer laminate, since such gas barrier layers must be surrounded by at least one, often two rather thick protective outer layers of plastic on each respective side of the laminate.

The main drawback with these known polymer barrier materials is, furthermore, that they are not as reliable as Al-foil for the purpose of aseptic packaging, nor have as good gas barrier properties as would be desired for ESL packaging at economical polymer layer thickness.

Moreover, if barrier properties vis-à-vis migrating aroma substances from the packaged product into the packaging material of the package walls are desired, an additional layer of a material having so-called non-scalping properties must be included in the laminated material, since neither EVOH nor PVOH owns such properties.

Liquid crystal polymers, LCP, for the purpose of the present invention, are preferably stiff aromatic copolyesters that form liquid crystals in solution and in the melted state. The molecules can be described as rigid rods having aromatic blocks or segments. The aromatic segments can be easily arranged in ordered structures to provide crystallisation. A new phase is thus formed; a phase that can be described as something in between solid and isotropic liquid states.

The liquid crystal polymers, LCP, have the highest density among polymers and therefore provide the highest possible polymer material barrier towards for example oxygen and moisture, as well as to various aroma substances in food products. They have a potential to provide a barrier equally high as that of metals, provided a very high crystallinity can be reached. At higher crystallinities, the LCP molecules may be more densely packed together through orientation and thus provide a more efficient barrier towards penetrating oxygen gas molecules. The material is not sensitive to humidity, why the oxygen barrier is higher than that of EVOH and PVOH at high moisture content in the adjacent packaging material layers and surrounding air.

However, the melt processing of liquid crystal polymers is difficult due to anisotropic behaviour. The liquid crystal polymer molecules will orient in the liquid state while applying forces to the polymer melt during melt processing of the polymer and it has hitherto been impossible to extrusion coat a thin, flat, even film layer of LCP onto a substrate web. Because the price of the LC polymers is also rather high, LC polymers have not actually been used as barrier materials in practical food packaging applications.

In the prior art, films from liquid crystal polymers are generally manufactured in such a way that biaxial orientation of the polymer molecules occurs. A biaxially oriented film will have high stiffness and mechanical strength in both biaxial directions of the film, i.e. both in the machine direction (MD) and in the direction transversal to the machine direction (TD). The biaxial orientation must be carried out while the LCP is in the molten state, i.e. in the die or immediately when the melt leaves the die gap. Special dies are employed to achieve this effect, such as inflation dies or counter rotating dies. A common way to manufacture biaxially oriented film from LCP is to extrude a tubular film through an annular die, the tube being stretched both in the machine and the transversal direction as it is expanded by blowing or inflation with air.

It has hitherto been considered impossible to use a uniaxially oriented film of LCP for the purpose of packaging, since such a film of the thickness hitherto conceivable, would be too weak transversal to the machine direction and would split easily down the length (MD) of the film. It has up to now not been possible to extrude a thin, even, flat film of LCP by means of flat coat extrusion through an ordinary flat film die. Furthermore, it has also not been possible to extrusion coat a thin, even, flat film of LCP onto a running substrate web. Especially, it has not been possible to extrusion coat a thin, even, flat film of LCP onto a running substrate web at an economical speed. By "thin" is preferably meant a thickness of less than 10 µm, more preferably from about 2 to about 8 µm, most preferably from 3 to 7 µm. It has hitherto been considered necessary to pre-manufacture LCP films of economical thickness by a separate process, involving also biaxial stretching of the LC polymer and, thus, requiring a longer manufacturing time than ordinary extrusion coating as employed in the art of high speed production of packaging laminates.

Since it has generally been considered impossible to extrusion coat a flat, thin film of LCP onto a substrate in the manufacture of a laminated packaging material, development and research efforts have instead been spent on alternative methods of making barrier films or layers of LCP.

According to one route of research and development, the LC polymer is blended with a second thermoplastic, isotropic polymer in order to improve the melt processability, as disclosed in WO 95/23063. The suggested preferred thermoplastic polymers for providing the desired melt processability properties are polyolefins such as LDPE. Blending decreases the anisotropic behaviour of LCP and thereby decreases the effect of orientation. Still, orientation in biaxial directions is said to be preferred in order to prevent brittleness. According to WO 95/23063, the blends may be extrusion coated onto for example a paper web substrate and are said to provide good gas barrier properties despite the dilution with a non-barrier polymer. In particular, the blends are processed in such a way that the morphology of the LCP/ isotropic polymer is laminar, the LCP forming the continuous phase and the isotropic polymer being gathered at the surface areas of the LCP layer in the form of overlapping lamellae. In practice, blends between two such different polymers are not processable into a film without the use of compatibilising compounds, in the form of functionalised reactive polymers.

In particular, it is very difficult to extrude homogeneous layers with constant thickness from the blends of LCP and polyolefin. The LCP in the blend forms lumps within the blend, which in turn renders the extruded layer uneven. At the position of each lump there will be a protrusion, while in the surrounding layer there will be an area of lower thickness. Naturally, such irregularities in the thickness of the extruded layer negatively affects the adhesion between the blend layer and the adjacent layers.

Also EP-A-865908 discloses a similar blend of a liquid-crystal polyester resin and a rubber having a functional group reactive with the LC polyester. The LC polyester constitutes the continuous phase of the blend, while the rubber is the dispersed phase. EP-A-865908 further relates to a paper-based laminated material and packaging container, having a gas barrier layer from the LC polyester blend. The laminate has excellent heat resistance, flexibility and gas barrier properties and may be used for packaging of milk and juice cartons. D1 reveals no background about the reason as to why the rubber compound is included in the LC polyester layer. On page 13, lines 19-21, however, it is stated that if less that 0,1 weight % of rubber is included, the film-forming properties of the composition may not be improved and that the manufacturing cost will increase. The LC polyester barrier layer is in the Examples clearly preferably obtained by film blowing technology. The film obtained is biaxially oriented.

Optimisation of the blend composition in relation to barrier properties, processability and adhesion to adjacent layers is thus complex and time consuming, in practice by necessity involving also a compatibilising compound as third component in the blend.

According to other routes of research and development, films are manufactured from a LCP melt by developing the techniques of biaxially orienting the LCP in the process of making the LCP one- or multilayer films. EP503063 discloses a composite film containing an LCP layer and a thermoplastic layer laminated on at least one surface of said crystal polymer layer and methods of manufacturing such films and layers by coextrusion techniques, whereby biaxial orientation of the LCP is achieved, US patent No. 5589236 describes a method of controlling the LCP molecular orientation in such a way that molecular orientation in one first direction in one layer or part of a layer, by a first angle with respect to the machine direction, is balanced by molecular orientation in a second, opposite direction in a second layer of part of the layer, by the same angle with respect to the machine direction, thus compensating and counter-balancing tensions within the film or layer in such a way that curling of the resulting film is avoided. The object of the invention as described in US5589236 is, thus, to provide planar films and layers, which do not curl due to tensions resulting from different coefficients of thermal expansion between and within layers.

The main drawbacks of the processes described in EP503063 and US5589236 are that special equipment and film formation dies need to be employed in order to be able to melt process the LCP and achieve the desired biaxial orientation. Longer time for manufacturing of the LCP film is required as well as more complex equipment, than is desired in the art of producing liquid food carton packaging laminates. It is still difficult to obtain a film that is planar without inherent tensions due to molecular orientation and the process must be carefully optimised with respect to this phenomenon.

Thus, there remains a need to find a simple economical and reliable process of incorporating a thin, flexible layer of homogeneous LCP in a packaging laminate.

### DISCLOSURE OF THE INVENTION

It is therefore an object of the present invention to realise a novel, cost-effective, well-integrated, laminated packaging material of the type described by way of introduction, which possesses excellent barrier properties, in particular barrier properties against oxygen gas, but also good liquid barrier properties as well as good mechanical properties, such as high flexibility and good adhesion between the layers of the laminate.

Another object of the invention is to realise a packaging material having excellent non-scalping properties towards migrating substances from the packaged product in to the package wall material.

A further object of the present invention is to realise a packaging material for producing packaging containers, which are particularly well suited for aseptic packaging and long term storage of liquid food products as well as for "extended shelf life" (ESL) packaging.

These objects are attained according to the present invention by a laminated packaging material comprising a core layer of paper or carton and a barrier layer consisting of a liquid crystal polymer (LCP), which LCP is applied in a quantity of from 2 to 10 µm and is coextrusion coated together with at least one intermediate bonding layer onto the core lyaer in such a way that the LCP of the barrier layer is substantially mono-oriented.

Such a packaging laminate has, thus, not been thought possible and economical to produce up to now, due to problems with melt processability and bad mechanical properties of the film or layer in the direction transverse to the machine direction (TD). The major advantage achieved by such a packaging laminate is, increased crystallinity and alignment of the LCP molecules within the LCP layer and thereby increased barrier properties, since the polymer molecules are closer together. Improved barrier properties are reliably obtained although the LCP layer now can be made thinner than was previously possible. Furthermore, the gas barrier properties are improved in environments with high humidity. Quite contrary to EVOH and PVOH, the LCP material can thus be used as a barrier material even in direct contact with liquid and moisture. The oxygen barrier is even improved at increasing humidity due to a plasticising effect. The water molecules are plugging gaps, i.e. imperfections in the crystalline structure of the LCP molecules, and thus further improving the tightness properties of the LCP layer against most substances. Actually, the LCP material performs best in terms of barrier properties when it has direct contact with the liquid food product to be packed, in a container of the packaging laminate of the present invention.

The moisture vapour barrier is superior to that of HDPE as well as that of oriented polypropylene (OPP).

LC polymers are comparable to polyethyleneterephtalate (PET) in terms of scalping and is thus to be considered as a so-called "non-scalping" material.

Furthermore, the light barrier of LCP is generally better than that of for example LDPE, which is an advantage for long term storage of filled packages.

In the packaging laminate according to the invention, the core layer comprises a paper or paperboard layer. Preferably, the thickness and rigidity of the paper core layer is such that a self-supportable packaging container having the shape of a brick or a gable-top is obtainable by fold-forming and sealing of the packaging laminate.

The liquid crystalline polymer employed may comprise an aromatic main chain thermotropic polymer, preferably a thermotropic polyester, poly (ester amide), poly(ester ether), poly(ester carbonate) or poly(ester imide). Preferably, it comprises a copolymer of a polyester, such as a copolymer of poly(ethylene terephthalate) and hydroxy benzoic acid or a copolymer of hydroxynaphthoic acid and hydroxybenzoic acid. Generally, the liquid crystalline polymer can be defined as a polymer which is formed when the components of the following general formulas (or at least two of them) are reacted with each other: a dicarboxylic acid of formula HOOC-R₁-COOH, a diol of formula HO-R₂-OH, and an oxycarboxylic acid of formula HO-R₃-COOH, wherein R₁, R₂ and R₃ represent a bivalent aromatic hydrocarbon group, a group of formula R₄-X-R₅, wherein R₄ and R₅ represent a bivalent hydrocarbon group and X is an oxygen or a sulphur atom, a sulphonyl, carbonyl, alkylene, or ester group or X is a single bond, a xylylene group or a bivalent aliphatic hydrocarbon group. The liquid crystalline polymer can also comprise a homopolymer of an oxycarboxylic acid of formula HO-R₃-COOH.

Examples of commercially available LCPs of the class aromatic copolyesters are Vectra ® (Hoechst-Celanese), Xydar ® (Amoco Performance Products), HX type LCPs (Du Pont), Eikonol ® and Sumikasuper ® (Sumitomo Chemical) Rodrun ® (Unitika) and Granlar ® (Granmont).

More preferably, the LCP is an aromatic copolymer based on p-hydroxybenzoic acid and hydroxynaphthoic acid (PHB/ HNA) or a copolymer from polyethyleneterephthalate and p-hydroxybenzoic acid. Most preferably, the LCP is a PHB/HNA based aromatic copolymer marketed under the trade name Vectra A 950 ® or a LCP polymer marketed as Vectra RD 501 ®. The most preferred LCP, i.e. Vectra A 950 ®, resembles LDPE (the one usually employed in the field of packaging has a melt index (MI) of about 6-8 g/10 min at 190 °C and 2,16 kg (ASTM 1278) with regards to viscosity properties, and therefore is the most suitable LCP for coextrusion lamination with said LDPE.

The barrier layer of LCP is coextrusion coated together with at least one intermediate bonding layer on the core layer. Such a packaging laminate is highly cost advantageous due to the efficient method of manufacturing and has excellent adhesion between the layers, insofar as an intermediate bonding layer suitable for adhering to the specific LCP layer is selected. Furthermore, the encapsulating coextrusion layers help to support and distribute the layer thickness of the LCP layer evenly. It is preferred that the adhesive polymer is suitable for melt processing at a temperature close to that of the LCP and has about the same rheologic behaviour, in order to provide optimal adhesion. Preferably, the intermediate bonding layer, adjacent to the barrier layer, comprises an adhesive olefin copolymer containing glycidylmethacrylate groups. The oxirane ring of the glycidyl methacrylate is very reactive and has been found to be highly advantageous for creating adhesion to the LCP layer. More preferably, the adhesive polymer of the intermediate bonding layer is a random terpolymer of ethylene, acrylic ester and glycidylmethacrylate. Most preferably, the adhesive polymer is a random terpolymer of ethylene, methyl acrylate and glycidylmethacrylate. A well functioning example of such an adhesive polymer is available from Elf Atochem, i.e. "Lotader AX 8900" ®.

The barrier layer is applied in the packaging laminate in a quantity of from about 2 to about 10 µm, preferably of from about 3 to about 7 µm, most preferably of from about 3 to about 5 µm. Films or layers of a uniaxially oriented LCP layer having such low thickness has hitherto not been possible to produce.

At thicknesses below 3 µm, in some cases below 2 µm, the thickness of the film or layer obtained will not be reliably even and difficulties during the melt extrusion process will occur. At thicknesses higher than about 7 µm, in some cases higher than 10 µm, the extruded film or layer obtained may suffer from having anisotropic mechanical properties, i.e. the LCP may show weakness and inflexibility in the direction transverse (TD) to the machine direction. Above all, thicker layers of LCP are unnecessary, since the cost of the packaging laminate will become higher without any increase of the barrier properties. The most preferable thickness of the LCP layer has been found to be about 5 µm. At this thickness, barrier properties are optimally balanced against mechanical properties in the TD of the film. It has surprisingly been found that, at low thickness of the LCP layer excellent gas barrier properties are obtained as well as mechanical properties, i.e. excellent elongation at break, no weakness or brittleness in the TD of the layer being experienced. The conclusion that the LCP layer in the laminated packaging material according to the present invention has excellent elongation at break values in the TD, can be made by the fact that the oxygen barrier values measured in filled packages are excellent. The oxygen barrier of one-liter filled Tetra Brik® packages sealed by ultrasonic heat sealing, tested according to ASTM D3985-84 was at least 0.3, actually 0.25 cc/ 24 h/ 0.21 atm. O₂ at 23 C, 50 % RH or better, and may at process optimisation become preferably 0.1 cc/24 h/0.21 atm. or better. The structure of the laminated material was / LDPE/ paperboard/LDPE/ adhesive polymer/ LCP/ adhesive / LDPE/ in amounts of /12/ paperboard/20 / 5/ 5/ 5/ 20/ g/m².

An LCP oxygen barrier layer does not crack or deteriorate at corners and double folded areas (so called K-crease zones) when fold forming the package to the same extent as an aluminium foil does. Eventual cracks are fewer and much smaller and finer. The good elongation at break properties of LCP polymers are important in the folding zones since the material is bent at folding and the LCP layer needs to be able to elongate over the bended core layer. Furthermore, an important advantage with the LCP gas barrier layer compared to some other polymer gas barrier materials is, that its gas barrier properties are improved by the influence of moisture, i.e. the gas barrier properties of the material are better in a package filled with liquid than in an empty package.

According to a preferred embodiment of the invention, the other side of the gas barrier layer facing away from the core layer is bonded to a layer of a thermoplastic heat sealable polymer by means of an intermediate layer of adhesive polymer. Such a heat sealable layer of thermoplastic polymer preferably has a thickness and quality usual in the field of heat sealable packaging laminates. Preferred examples of suitable thermoplastic heat sealable polymers are polyolefins, such as polyethylenes, or polyethyleneterephthalate (PET).

The intermediate bonding layer preferably comprises an adhesive polymer as defined above.

The gas barrier layer is coextrusion coated together with the adjacent layers of adhesive polymer and thermoplastic heat sealable polymer on the core substrate layer. The advantage of such a laminate is that it is highly cost effective, since all polymer layers on the inside of the packaging laminate, i.e. on the side which is to face the packaged product in a packaging container obtained from the packaging laminate, may be extruded in one operation. Such a laminate has hitherto not been possible to produce with the desired thicknesses of a uniaxially oriented LCP barrier layer as well as satisfactory interlayer adhesion between the layers.

Preferably, the other side of the core layer facing away from the barrier layer is also coated with an outer layer of a thermoplastic heat sealable polymer.

According to a further aspect of the invention, a method of manufacturing the laminated packaging material is provided.

The method comprises coextrusion coating the barrier layer together with at least one intermediate bonding layer onto the core layer in such a way that it is stretched in substantially only one direction (the machine direction), the LCP polymer layer thus being substantially uniaxially oriented and applied in a quantity of from 2 to 10 µm.

Preferably, the extrusion die is of the type fixed width coat hanger die or/and an internally deckled die, provided with a device for distributing the individual layers independently from each other, for example a feedblock. Deckles have the function of restricting the extruded polymer from a wider die to the desired width, which is usually the width of the substrate web.

Such a die, contrary to for example an externally deckled die, provides a smooth flow of the LCP melt without so-called dead zones where orientation would occur and, thus, does not disturb the layered structure of the polymer formed within the die unit, in order to obtain uniaxial orientation in a thin extrusion coated layer. The dwell time of the LCP within the die should be as short as possible.

Preferably, the pressure of the LCP melt in the extrusion die should be kept constant by means of a melt pump in combination with the LCP extruder.

A constant melt pressure provides a uniform shear rate in the die unit and, thus, smooth flow of the polymer. This is also highly important in order to keep the layered structure of the polymer.

The barrier layer is extruded to a thickness of from about 2 to about 10 µm, preferably from about 3 to about 7 µm, most preferably to about 5 µm.

The method comprises coextrusion coating the barrier layer together with the adjacent layers of adhesive polymer and thermoplastic heat sealable polymer on the core layer. By this method, the LCP barrier layer will have support from the surrounding polymer layers and will more easily be kept even and uniform over the whole area of the film, or laminate.

Advantageously, the difference between the melt processing temperature of the LCP polymer and the melt processing temperature of the polymers of the adjacent layers is sufficiently small so that shear forces occurring between the layers at cooling after coextrusion lamination are eliminated or substantially reduced.

If the difference in melt processing temperatures is too great, the polymer layers will solidify at different occasions downstream the process. This may cause bond rupture between the layers and thereby loss of adhesion.

A preferred method of manufacturing the packaging laminate of the invention comprises the steps of co-extruding a multilayer film including the LCP barrier layer, pre-treating the surface of the core layer substrate in order to activate it, optionally pre-treating the contact surface of the freshly extruded multilayer film, and subsequently bringing the pre-treated surfaces to adhere to each other by the application of pressure.

Preferably, the core layer substrate is surface activation treated by means of a dry vacuum based surface activation method, such as plasma, corona or flame treatment and, optionally, the core layer contact side of the multilayer film may be treated with ozone.

According to a third aspect of the invention, a configurationally stable packaging container manufactured from the packaging laminate of the invention is provided.

### BRIEF DESCRIPTION OF THE ACCOMPANYING DRAWINGS

The present invention will now be described in greater detail hereinbelow with the aid of embodiments and with reference to the accompanying Drawings, in which:
Figures 1a, 1b,1c and 1d are cross-sectional views of laminated packaging materials according to the present invention;
Figure 2 schematically illustrates a method of manufacturing of the respective laminated packaging material described in conjunction with Figure 1;
Figure 3 schematically illustrates an apparatus for carrying out the method of the invention, and
Figures 4a and 4b are side elevations in perspective of conventional, configurationally stable packaging containers which are produced from a laminated packaging material according to the present invention.

### DETAILED DESCRIPTION OF THE INVENTION

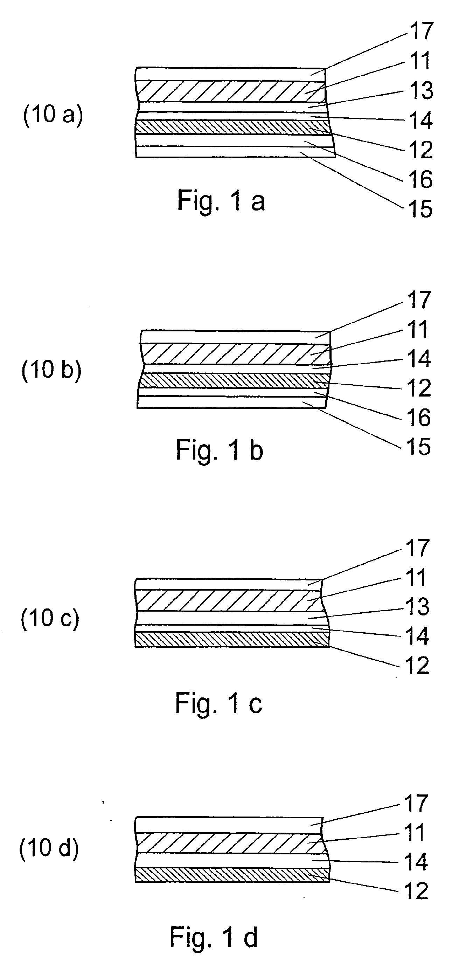

Referring to Fig. 1a, a cross-sectional view is shown of a preferred laminated packaging material 10a according to the present invention. The packaging material 10a includes a core layer, preferably of a configurationally rigid but foldable paper or paperboard. Alternatively, the core layer 11 may be made of a thicker, more rigid layer of plastics, such as preferably foamed plastics. On one side of the core layer 11, there is applied a barrier layer 12 of a liquid crystal polymer of the type "Vectra A 950 " ®. The LCP is substantially uniaxially oriented and the thickness of the layer is about 5 µm.

The barrier layer 12 is bonded to the core layer 11 by means of a layer of a thermoplastic polymer 13, in particular a polyethylene, such as low density polyethylene (LDPE), directly adjacent to the core layer, and a layer of an adhesive polymer 14, between the LDPE layer 13 and the barrier layer 12, comprising a random terpolymer of ethylene, acrylic ester and glycidylmethacrylate, Lotader AX 8900 ®.

This particular type of adhesive polymer has proven to be most advantageous for obtaining adhesion between the LCP layer and its adjacent layers, compared to other adhesives normally used in packaging laminate production. It is crucial that the properties of a package for long term storage of liquid food products stays intact and that the layers of the packaging laminate remain well integrated with each other, i.e. that the adhesion between the layers of the packaging laminate is maintained. Thus, adhesion tests were performed on various packaging laminates carried out in accordance with the invention. Comparative adhesion tests performed on identical laminate structures, except for the choice of adhesive polymer, showed that the samples employing the adhesive polymer Lotader AX 8900 ® gave a very good bond to the adjacent LCP and LDPE layers. At the point of breakage, a cohesive failure in the LCP layer itself occurred.

When other adhesives, such as carboxylic acid or maleic anhydride modified polyolefins common in this field of technology are used, still good adhesion may be obtained, however, with final failure at the interface between the layers. Failure at the interface between layers is, however, less desirable/preferable in laminates for liquid packaging.

These results show that the best possible adhesion to the LCP layer is obtained by using said copolymer of ethylene, acrylic ester and glycidylmethacrylate.

Thus, when the adhesion in a five-layer laminate of 19 µm LDPE, 7 µm adhesive polymer, i.e. Lotader AX 8900 ®, 7 µm LCP, 7 µm adhesive polymer and 16 µm LDPE was tested by an Instron peel test method after 3 weeks storage of the laminate, there was cohesive failure in the LCP layer at about 114,5 N.

The thermoplastic polymer of layer 13, may alternatively comprise a polyethylene of the type linear low density polyethylene (LLDPE) or metallocene-polyethylene (m-PE) or blends of these with LDPE.

On the other side of the LCP barrier layer 12, which is turned to face away from the core layer 11, an outer heat sealable layer 15, of a thermoplastic polymer of the same or different kind from the bonding layer 13, is applied, which is bonded to the barrier layer 12 by means of a second intermediate layer 16 of said adhesive polymer.

The outer heat sealable layer 15, preferably is applied in an amount of at least 15 g/m², more preferably at least 20-25 g/m².

On the opposite side of the core layer, which is to constitute the outer surface of a package manufactured of the packaging laminate of the invention, a second outer heat sealable layer 17, of the same or different kind of thermoplastic heat sealable polymer as in layers 13 and 15, is applied in an amount of preferably at least 10 g/m², more preferably 10-15 g/m².

The five layers 12, 13, 14, 15 and 16 are preferably all coextrusion coated together, but may alternatively, according to a less advantageous embodiment, be applied onto the substrate core layer 11 by means of coextruding layers 12, 13 and 14 in a first step and coextrusion coating the layers 15 and 16 onto the barrier layer 12 in a second step.

Referring to Figure 1 b, a cross-sectional view of another preferred laminated packaging material 10b according to the present invention, is shown. The packaging laminate 10b has essentially the same structure as the packaging laminate 10a, wherein the barrier layer 12, however, is bonded to the core layer 11 directly by a layer of an adhesive polymer 14, the polyolefin layer 13 being omitted.

The four layers 12, 14, 15 and 16 are preferably all coextrusion coated together onto the core layer substrate 11.

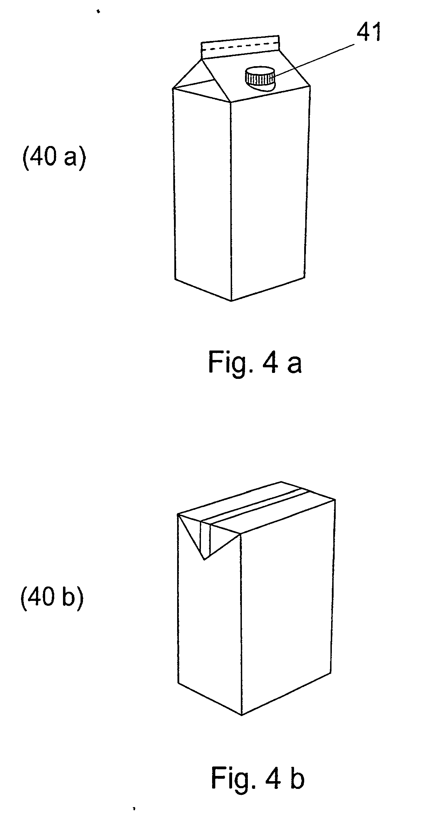

The packaging laminate structures of Figure 1a and Figure 1b are highly suitable for the manufacture of packaging containers of the Tetra Brik® type, for aseptic packaging, by means of heat sealing (see also the description to Figure 4b).

In Figure 1c, a cross-sectional view of another preferred laminated packaging material 10c of to the present invention, is shown.

The packaging material 10c includes a core layer, preferably of a configurationally rigid but foldable paper or paperboard. On one side of the core layer 11, there is applied a barrier layer 12 of a liquid crystal polymer of the type "Vectra A 950 " ®. The LCP is substantially uniaxially oriented and the thickness of the layer is about 5 µm.

The barrier layer 12 is bonded to the core layer 11 by means of a layer of a thermoplastic polymer 13, in particular a polyethylene, such as low density polyethylene (LDPE), directly adjacent to the core layer, and a layer of an adhesive polymer 14, between the LDPE layer 13 and the barrier layer 12, comprising a random terpolymer of ethylene, acrylic ester and glycidylmethacrylate, Lotader AX 8900 ®.

On the opposite side of the core layer, which is to constitute the outer surface of a package manufactured of the packaging laminate of the invention, an outer heat sealable layer 17, of the same or different kind of thermoplastic heat sealable polymer as in layer 13, is applied in an amount of preferably at least 15 g/m².

The three layers 12, 13 and 14 are coextrusion coated together onto the core layer substrate 11.

Referring to Figure 1d, a cross-sectional view of another preferred laminated packaging material 10d according to the present invention, is shown. The packaging laminate 10d has essentially the same structure as the packaging laminate 10c, wherein the barrier layer 12, however, is bonded to the core layer 11 directly by a layer of an adhesive polymer 14, the polyolefin layer 13 being omitted.

The two layers 12 and 14 are coextrusion coated together onto the core layer substrate 11.

The packaging laminate structures of figure 1c and Figure 1d are highly suitable for the manufacture of packaging containers of the Tetra Rex®, gable-top type, for ESL packaging, by means of lower speed heat sealing or alternative sealing methods (see also the description to Figure 4a).

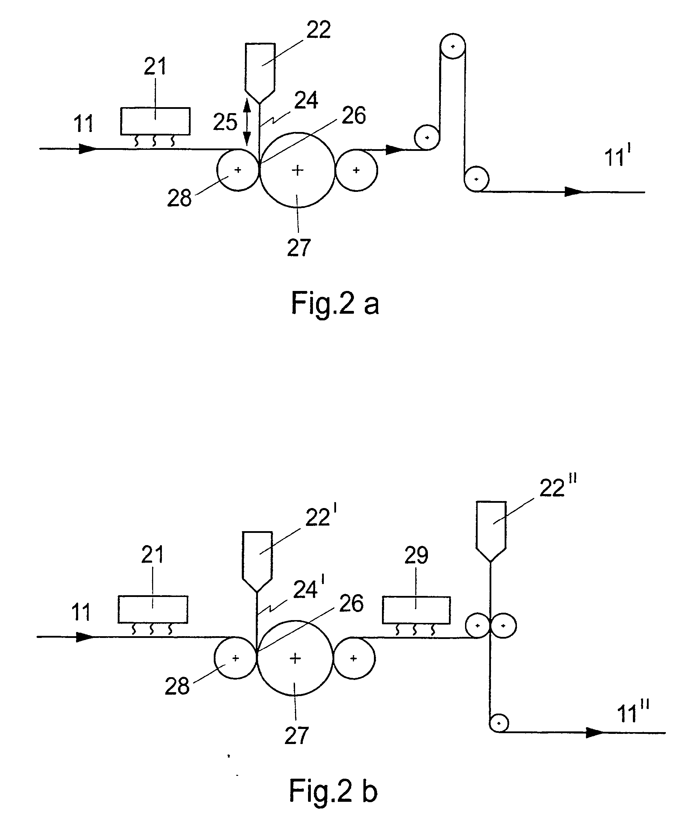

Figure 2a schematically illustrates a preferred method of manufacturing the laminated packaging materials of Figure 1a, 1b,1c and 1d respectively.

A web of a paperboard substrate core layer 11 is unwound from a roll (not shown) and forwarded through a surface activation station 21, where the surface is activated by means of corona and/or flame treatment.

The layers 12-16, as set out in the Figures 1a to 1d, are coextruded 22 by generating a two-, three-, four- or five-layer not fully integrated pre-film 24 respectively in the feedblock of a die unit of a coextrusion device 22, the multilayer pre-film 24 being drawn and led through an air-gap 25 between the die and the forward running paperboard substrate web 11 into a roller nip 26 between a chill roller 27 and a counter pressure roller 28.

The LCP barrier polymer, the adhesive polymer and the thermoplastic heat sealable polymer exit the die gap at a relatively low, steady speed. As the multilayer pre-film is drawn towards the roller nip 26, the speed by which the pre-film 24 is forwarded is accelerated. The substrate web travels forward in the lamination process at at least 300-400 m/min and pulls the pre-film down into the nip. Due to said acceleration, the LC polymer of the barrier layer 12 is strongly oriented in the direction of the running web, i.e. the machine direction (MD). Although, the LCP to some extent is multiaxially oriented within the die unit of the coextrusion device 22, the subsequent strong orientation in the MD makes the film substantially uniaxially oriented. Any orientation in the transversal direction, or other directions than the MD, within the LCP layer is negligible. The ratio of the speed of the substrate web (the speed at the roller nip) to the speed of the extruded film at the die is about 3-4 times higher than in the process of extrusion casting of sheets or films, which clearly shows the substantialy more difficult circumstances of coextrusion processes.

The thickness of the LCP barrier layer 12 is preferably about 3-7 µm, most preferably about 5 µm. Surprisingly, the mono-oriented LCP layer will not be brittle or inflexible at all in the TD of the layer. Even if a piece of the layer is twisted or squeezed into a little ball of plastics, the material will not crack or split. This is highly advantageous for the manufacture of configurationally stable packaging containers by means of fold-forming a packaging laminate including a rigid but foldable core layer, since the risk of cracks in the LCP layer at folds and corners of the package is eliminated or substantially reduced.

The coextruded and still hot, molten multilayer pre-film 24 is brought to adhere to the paperboard substrate web and to become fully integrated, the different layers of the pre-film 24 adhering well to each other, at the roller nip 26 by means of pressure and the heat from the polymer layers. It is preferred that several polymer layers are coextruded together, since the heat of the molten pre-film will be better kept until it reaches the substrate surface and, thus, adhere better between themselves and to the paper web. The thicker layers involved in the pre-film, the higher heat energy is supplied in order to secure adequate bonding between the layers in the laminate.

The temperature of the chill roller 27 should preferably be from about 8 to about 15 °C.

The thermoplastics coating 17 may be applied by extrusion coating of the other side of the core layer 11, which is turned to face away from the gas barrier layer 12, either before or after the coextrusion coating method shown in Figure 2a.

The thus on both sides extrusion coated paperboard web 11' is forwarded and may be wound onto a second roll (not shown).

Figure 2b schematically illustrates an alternative but less preferred method of manufacturing the laminated packaging materials of Figure 1a and 1b respectively.

A web of a paperboard substrate core layer 11 is unwound from a roll (not shown) and forwarded through a surface activation station 21, where the surface is activated by means of corona and/or flame treatment.

The layers (13), 14 and 12, as set out in Figures 1a and 1b, are coextruded in said order in a first coextrusion coating step, by generating a two- or three-layer not fully integrated pre-film 24' respectively in the feedblock of a die unit of a coextrusion device 22', the multilayer pre-film 24' being drawn and led through an air-gap 25 between the die and the forward running paperboard substrate web 11 into a roller nip 26 between a chill roller 27 and a counter pressure roller 28. The coextruded and still hot, molten multilayer pre-film 24' is brought to adhere to the paperboard substrate web 11 and to become fully integrated, the different layers of the pre-film 24' adhering well to each other, at the roller nip 26 by means of pressure and the heat from the polymer layers. It is preferred that three polymer layers are coextruded together, since the heat of the molten pre-film will be better kept until it reaches the substrate surface and, thus, adhere better to the paper web.

In a second coextrusion coating step, the layers 16 and 15 are coextruded in said order onto the surface of the previously coextruded barrier layer 12, by a second coextrusion device 22", following a surface activation treatment in a corona and/or flame treatment station 29.

The thermoplastics coating 17 may be applied by extrusion coating of the other side of the core layer 11, which is turned to face away from the gas barrier layer 12, either before or after the coextrusion coating method shown in Figure 2b.

The thus on both sides extrusion coated paperboard web 11'' is forwarded and may be wound onto a second roll (not shown).

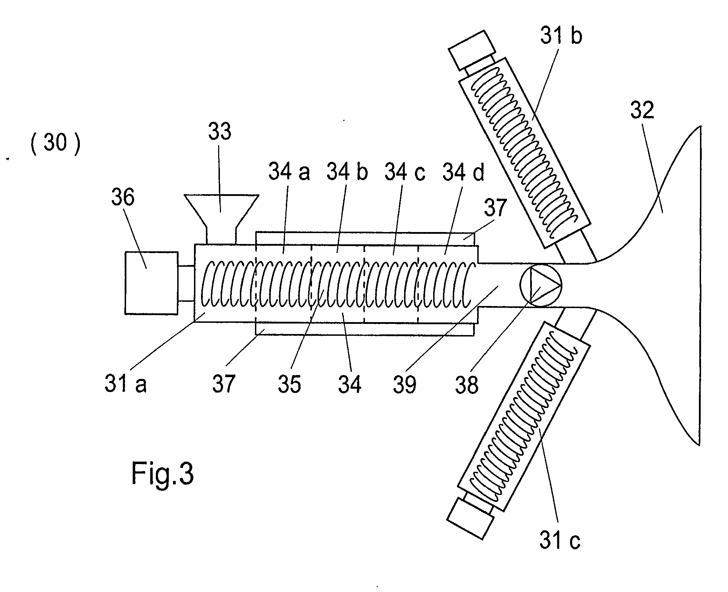

Figure 3 schematically illustrates an extrusion device 30 for carrying out the method of the invention, comprising a first extruder 31a for extruding LCP, a second and, optionally, a third extruder 31 b and 31 c for extruding polymers intended for layers adjacent to the LCP layer as well as a die unit 32. The extruder 31 a has a raw material hopper 33 for charging granules of the raw material LCP and a cylinder body 34 having a screw 35 of conventional type provided therein, said screw being rotatable around its longitudinal axis and being driven by an electrical or hydraulic motor 36 having variable rotation speed. The raw material is charged into the hopper 33 and falls down into the cylinder body 34 which is heated with external heating radiators or heating coils 37. In the cylinder body 34 the LCP is heated by the heating coils 37 and distributed by friction during transport forwards through the cylinder body 34 by the rotating screw 35. Preferably, the mixing of the LCP in the screw should be performed as gently as possible at as low shear rates as possible. When the LCP reaches the other end of the heated cylinder body 34, it is a uniform melt which by means of the screw and an extra melt pump 38 is pumped through a so-called piping 39 between the cylinder body 34 and the die unit 32 and, thus, injected at constant pressure into the die unit. The extra melt pump 38 in the LCP extrusion device, thus, keeps the pressure of the LCP melt before the die unit 32 constant, preferably at about 40-50 bar. If the variations in the pressure of the LCP melt are too great, extrusion of an even, flat film or layer will become very difficult.

Simultaneously, the polymer melts for adjacent polymer layers are fed by similar equipment into the die unit 32 by the second and, optionally, third extruders 31 b and 31 c. However, no extra melt pump is needed for feeding these polymer melts into the die unit 32. The pressure will easily be kept constant by means of the extruders only, since these polymer melts are normally much easier to melt process than LCPs. The different polymer feeds are distributed into a desired number of channels of a multi-layer feedblock (not shown) being part of the entrance of the die unit 32 and extruded through the die out of the die gap as a multilayer hot pre-film, still not having full adhesion between the layers. The hot pre-film is applied directly onto a running substrate web, preferably a web of a paperboard layer. The distance between the die gap of the die unit, through which the polymer melts exit, and the substrate web surface, i.e. the so-called air gap, should be sufficiently short so that the LCP does not crystallise while the polymer of the adjacent layer is still a melt, preferably as short as possible. Preferably, the air gap should be shorter than about 200 mm, more preferably shorter than about 180 mm and most preferably shorter than 160 mm. If the air-gap is too big, the cooling rate of the different polymers in the different layers may cause the LCP layer to solidify earlier than the adjacent layers in the roller nip, which may influence the adhesion between the layers and the structure at the interface between the layers negatively.

In a typical extrusion coating lamination operation according to the invention, an LCP of the type "Vectra A 950" ® is extruded together with LDPE having a MI of about 7 g/10 min at 190 °C and 2,16 kg (ASTM 1278) and an adhesive polymer being a random terpolymer of ethylene, acrylic ester and glycidylmethacrylate available from Elf Atochem, called "Lotader AX 8900" ®.

It is important that the different polymers to be co-extruded are matching each other with regards to rheological behaviour and flow properties, in order to be able to reliably extrude thin even layers. The viscosity ratios should accordingly be as close to unity as possible at the shear rate in the die in order to get stable laminar flows in the die. This is especially important for the LCP and the polymers of the layers directly adjacent to the LCP layer. The viscosities of the above polymers converge at shear rates somewhere above 100 s⁻¹. In general, the ratio between the viscosity of the LCP polymer and the polymers to be coextruded should lie within from 1:4 to 4:1, in order to be coextrudable. More preferably, the ratio should be between 1:3 and 3:1, most preferably about 1:1. If the differences in viscosities and rheological behaviour are too great, edge encapsulation of the higher-viscosity polymer by the lower-viscosity polymer may occur, i.e. the thickness of the higher-viscosity polymer will be reduced at the edges of the extruded film/layer. Furthermore, there is a risk for so-called interfacial disturbance, i.e. flow disturbances causing variations in the layer thicknesses.

For the range of shear rates in the die unit employed at the extrusion coating process of the invention, i.e. from 10 to 10000 s⁻¹, preferably from about 100 to about 2000 s⁻¹, the polymers to be coextruded should have viscosities within the range of from 1 to 1000 Pas, preferably from 1 to about 100 Pas.

The screw 35 to be used for the extrusion of LCP should have a high mixing capacity. In the typical extrusion coating lamination operation according to the invention, the cylinder body 34 and the screw 35 comprises a first, second, third and fourth mixing zone, 34a, 34b, 34c and 34d respectively. The temperature is carefully controlled throughout the LCP extrusion equipment. Typically, the temperature in the first mixing zone 34a is kept by the heating coils 37 at about 285-290 °C and the temperature of the second, third and fourth mixing zones is kept at about 290-300 °C. The temperature of the piping 39 between the cylinder body 34 and the die unit 32 as well as the melt pump 38 is kept at about 300 °C, while the temperature of the die unit 32 is kept at about 310 °C.

The said LDPE polymer may similarly be kept at about 300 °C during extrusion, while said adhesive polymer is kept at about 260 °C. The difference in melt processing temperatures of the different polymers to be coextruded should be sufficiently small so that shear forces occurring between the layers at cooling after coextrusion lamination are eliminated or substantially reduced.

The die gap of the die unit 32 advantageously is about 0,6 mm in this typical extrusion coating lamination operation of the invention. The air gap, i.e. the distance between the die gap of the die unit 32, through which the polymer melts exit, and the substrate web surface, should be as short as possible - in this case about 170 mm.

The running speed of the web substrate on to which the LCP is extrusion coated, was easily kept at about 300 m/min and was occasionally increased to about 400 m/min.

The LCP was coextruded together with adjacent layers of adhesive polymer and, adjacent to the other side of the adhesive layers, with layers of LDPE onto a running substrate web of paperboard. The thus coextrusion coated LCP barrier layer was even, flat and homogeneous in its uniaxially oriented morphology and had a thickness of approximately 5 µm.

The gas barrier properties were measured on the laminate structure of Figure 1a, manufactured by the method of Figure 2a. The layer thickness were about 20 g/m² of LDPE, 5 g/m² of adhesive polymer, 5 g/m² of LCP, 5 g/m² of adhesive polymer and 20 g/m² of LDPE. The measurement data are presented as [cm3,µm/(m2,24 hrs, 1 atm] at 50/80% RH with air being the test gas.
- Vectra A950:: 39.9/39.0 average, 0.3/1.8 standard deviation
- Vectra RD501:: 78.9/52.5 average, 2.4/9.0 standard deviation

The gas barrier obtained is directly proportional to the thickness of the barrier layer 12. As can be seen from the above, the oxygen barrier values are at least as good and even better at higher relative humidity, i.e. at 80 % RH compared to at 50 % RH.

The moisture barrier properties were measured using a Permatran-W 3/31 plane sample method at 37.8°C and 100% RH. It took 6-8 days before the values reported were reached. The permeation was initially about 40-60 g,µm/(m²,24hrs), n= number of samples.

| mtrl | average | std. dev. | n | max | min | barrier |
|---|---|---|---|---|---|---|
| 6.2 | 7.5 | 0.00 | 2 | 7.5 | 7.5 | Vectra A950 |
| 7.1 | 8.7 | 0.42 | 2 | 9.0 | 8.4 | Vectra RD501 |

Light transmission measurements were performed on pure about 50 µm thick films of Vectra A950 and RD501 ®, showing light barriers of 0.2% transmission at 300 nm to about 60% transmission at 800 nm. A film of about 40µm thick LLDPE+EAA has a >90% transmission at 300-800 nm. It can thus be concluded that the light barrier of LCP is better than that of pure LDPE.

The process for coextrusion lamination and obtaining such a LCP barrier laminate is possible by controlling the melt pump flow and thereby the pressure of the LCP melt before the die unit 32, the dimensions of the die unit, the die gap, the substrate web speed, the air gap between the die and the substrate surface, the matching of the rheological properties of the polymers to be coextruded and their melt processing temperatures and the gentle mixing of the LCP melt in the mixing zones of the extruder.

Figures 4a and 4b schematically illustrate conventional, configurationally stable packaging containers produced from a packaging laminate of the present invention.

Thus, liquid-tight, dimensionally stable packages 40a and 40b possessing good oxygen gas barrier properties can be produced from the laminated packaging material 10 according to the present invention, using known packing and filling machines which, in a discontinuous or continuous process, form, fill and seal sheet- or web-shaped packaging material respectively, into finished packages 40a; 40b.

The packaging containers according to the invention may be provided with an opening device 41, such opening/ closing devices being generally known in the field of liquid food packaging.

The process of converting the laminated packaging material into packaging containers of the type 40b may be carried out by, for example, first uniting the longitudinal edges of a web-shaped laminated packaging material 10 into a tube which is continuously filled with the liquid food product, whereafter individual packages 40b are separated by repeated transverse seals of the tube below the level of the contents. The packages 40b are separated from one another by incisions in the transverse sealing zones and obtain the desired geometric configuration, normally parallelepipedic, by a final folding-forming and sealing process.

Alternatively, packages of the type 40a may be realised by fold-forming of sheets into a carton blank capsule which is then filled and closed to form a finished package.

Heat sealing of laminated packaging material comprising a gas barrier layer of an LCP polymer according to the invention is preferably carried out by means of ultrasonic heat sealing. It was clearly shown that ultrasonic heat sealing methods works very well for packaging laminates comprising gas barrier layers of LCP. In ultrasonic heat sealing, the materials in the layers of the packaging laminate are vibrated and, if too sensitive, may be broken or destroyed by the ultrasonic waves. This proved to be no concern with LCP barrier layers. Ultrasonic sealing resulted in very strong sealing and left the LCP polymer layer intact with maintained mechanichal and gas barrier properties. Tests of the filled and sealed packages showed that they had very good oxygen barrier properties in combination with high seal strength at drop testing. The drop test method is a method to determine the impact strength of a package and to locate the weakest point in a package. Filled packages are tested after 24 hours conditioning storage at a determined temperature and relative humidity (23 °C and 50 % RH) . The drop testing apparatus is equipped with a leaning slide rail having an angle of impact of 90° or 110°. In a first step, the height at which leakage occurs at 90° is determined. The height is determined from dropping 10 packages at various heights. The height at which statistically 50 % of the packages leak is calculated, and a package is drop tested from that height. Another package is dropped at an adjusted height and in total 50 packages are dropped and studied for leakage. The same procedure is repeated at 110° dropping angle. From the results, the height at which 5 % of the tested packages are leaking is determined.

The method has been published as an official "Packforsk Norm PTN 13-70, Rev. 73", and in "Message Number 18". A very similar standard test method is applied to blow-molded plastic containers, according to ASTM-D 2463-95 ("Standard Test Method for Drop Impact Resistance of Blow-Molded Thermoplastic Containers").

The structure of the tested laminated material was / LDPE/ paperboard/LDPE/ adhesive polymer/ LCP/ adhesive / LDPE/ in amounts of /12/ paperboard/20 / 5/ 5/ 5/ 20/ g/m² and the packages formed therefrom were one-litre Tetra Brik® packages. From the results of the drop tests it was concluded that less than 5 % of the packages showed any leakage after having been dropped from a height of 1.75 meters, which indicates very good sealing quality.

It will be obvious to a person skilled in the art that the present invention is not restricted to the illustrated embodiments, but that various modifications and alterations thereof may be made without departing from the scope of the inventive concept as this is defined in the appended Claims. For example, the material structures illustrated in Fig. 1 are, naturally, not restricted to the illustrated number of layers, but this number may be both greater and smaller, and may be freely varied in response to the desired use of the packaging material. Likewise, the thicknesses of the different layers may vary according to specific requirements of for example the products to be packed, heat sealing requirements and market requirements.

## Claims

1. A laminated packaging material (10) for packaging of liquid food products, comprising a core layer (11) of paper or carton and a gas barrier layer (12) consisting of a liquid crystal polymer (LCP), **characterised in that** the gas barrier layer (12) of LCP is applied in a quantity of from 2 to 10 µm and is coextrusion coated together with at least one intermediate bonding layer (13, 14) onto the core layer (11) in such a way that the liquid crystal polymer of the barrier layer is oriented in substantially only one direction.

2. The laminated packaging material (10) as claimed in Claim 1, **characterised in that** the intermediate bonding layer (14), adjacent to the barrier layer (12), comprises an adhesive olefin copolymer containing glycidylmethacrylate monomer units.

3. The laminated packaging material (10) as claimed Claim 2, **characterised in that** the adhesive olefin copolymer is a random terpolymer of ethylene, acrylic ester and glycidylmethacrylate.

4. The laminated packaging material (10) as claimed in any of claims 1-3, **characterised in that** said LCP is an aromatic copolymer based on p-hydroxybenzoic acid and hydroxynaphtoic acid (PHB/ HNA) or a copolymer from polyethylene terephtalate and p-hydroxybenzoic acid.

5. The laminated packaging material (10) as claimed in any of the preceding Claims, **characterised in that** the barrier layer (12) is applied in a quantity of from 3 to 7 µm, more preferably of from 3 to 5 µm.

6. The laminated packaging material (10) as claimed in any of the preceding Claims, **characterised in that** the other side of the gas barrier layer (12) facing away from the core layer (11) is bonded to a layer of a thermoplastic heat sealable polymer (15) by means of an intermediate layer (16) of adhesive olefin copolymer.

7. The laminated packaging material (10) as claimed in Claim 6, **characterised in that** the gas barrier layer (12) is coextrusion coated together with the adjacent layers of adhesive polymer (14, 16) and thermoplastic heat sealable polymer (13, 15) on the core layer (11).

8. The laminated packaging material (10) as claimed in any of Claims 1 to 7, **characterised in that** the other side of the core layer (11) facing away from the barrier layer (12) is also coated with an outer layer (17) of a thermoplastic heat sealable polymer.

9. Method of manufacturing the laminated packaging material (10) as defined in any of the preceding claims, comprising coextrusion coating the barrier layer (12) together with at least one intermediate bonding layer (13, 14) onto the core layer (11) in such a way that the barrier layer consisting of the liquid crystal polymer is oriented in substantially one direction and is applied in a quantity of from 2 to about 10 µm.

10. Method of manufacturing the laminated packaging material (10) as defined in any of the preceding claims, comprising coextrusion coating the barrier layer (12) together with the adjacent layers of adhesive polymer (14, 16) and thermoplastic heat sealable polymer (13, 15) onto the core layer (11) in such a way that the LCP polymer is oriented in substantially only one direction and is applied in a quantity of from 2 to about 10 µm.

11. Method according to Claim 9 or 10, wherein the extrusion die (32) is of the type fixed width coat hanger die or/and an internally deckled die, provided with a feed-block.

12. Method according to any of Claims 9-11, wherein the pressure of the LCP melt in the extrusion die (32) is kept constant by means of a melt pump (38) in combination with the LCP extruder.

13. Method according to any of Claims 9-12, wherein the barrier layer (12) is extruded to a thickness of from 3 to 7 µm.

14. Method according to any of Claims 9-13, comprising the steps of co-extruding a multilayer pre-film (24) including the LCP barrier layer (12), pre-treating (21) the surface of the core layer (11) substrate in order to activate it, optionally pre-treating the contact surface of the multilayer film, and subsequently bringing the pre-treated surfaces to adhere to each other by the application of pressure.

15. Method according to claim 14, wherein the core layer substrate (11) is surface activation treated by means of a dry vacuum based surface activation method, such as plasma, corona or flame treatment and, optionally, the core layer contact side of the multilayer film is treated with ozone.

16. Method of manufacturing a laminated packaging material (10), the laminated material including a core layer (11) and a barrier layer (12) consisting of a liquid crystal polymer, comprising the steps of coextrusion coating (22) a flat layer consisting of LCP together with further polymer layers onto a substrate web including said core layer by means of an extrusion die (32) of the type fixed width coat hanger die or/and an internally deckled die, such that the LCP layer is stretched in substantially one direction.

17. Method according to claim 16, wherein the flat layer consisting of LCP has a thickness of from 2 to 10 µm the speed of the web is at least 300 m/minute, the air gap between the die gap outlet and the substrate web surface is less than 200 mm and the ratio between the viscosity of the LCP and the polymers of the layers coextruded together with the LCP layer is from 1:4 to 4:1 , the pressure of the LCP melt in the extrusion die (32) is kept constant by means of a melt pump (38) combined with the LCP extruder .

18. A configurationally stable packaging container (30) for the aseptic storage or storage with extended shelf-life of liquid, oxygen gas-sensitive foods, obtainable by fold-formation and sealing of a sheet- or web-shaped blank of a laminated packaging material (10) as claimed in any of Claims 1 to 8.

19. A filled packaging container for the aseptic storage or storage with extended shelf-life of liquid, oxygen gas-sensitive foods, obtainable by fold-formation and ultrasonic heat sealing of a sheet- or web-shaped blank of a laminated packaging material (10) as defined in any of Claims 1 to 8.

## Patentansprüche

1. Laminiertes Verpackungsmaterial (10) zum Verpacken von flüssige Nahrungsmitteln, umfassend eine Kernschicht (11) aus Papier oder Karton und eine Gassperrschicht (12), bestehend aus einem Flüssigkristallpolymer (LCP), **dadurch gekennzeichnet, dass** die Gassperrschicht (12) aus LCP in einer Menge von 2 bis 10 µm aufgetragen und mit wenigstens einer dazwischenliegenden Bindeschicht (13, 14) auf die Kernschicht (11) koextrusionsbeschichtet wird, so dass das Flüssigkristallpolymer der Sperrschicht im Wesentlichen in nur eine Richtung ausgerichtet ist.

2. Laminiertes Verpackungsmaterial (10) nach Anspruch 1, **dadurch gekennzeichnet, dass** die dazwischenliegende Bindeschicht (14), angrenzend an die Sperrschicht (12), ein haftendes Olefincopolymer mit Glycidylmethacrylatmonomereinheiten enthält.

3. Laminiertes Verpackungsmaterial (10) nach Anspruch 2, **dadurch gekennzeichnet, dass** das haftende Olefincopolymer ein zufälliges Terpolymer aus Ethylen, Acrylester und Glycidylmethacrylat ist.

4. Laminiertes Verpackungsmaterial (10) nach einem der Ansprüche 1- 3, **dadurch gekennzeichnet, dass** das LCP ein aromatisches Copolymer ist, basierend auf p-Hydroxybenzoesäure und Hydroxynaphtoesäure (PHB/HNA) oder ein Copolymer aus Polyethylenterephthalat und p-Hydroxybenzoesäure.

5. Laminiertes Verpackungsmaterial (10) nach einem der vorhergehenden Ansprüche, **dadurch gekennzeichnet, dass** die Sperrschicht (12) in einer Menge von 3 bis 7 µm, bevorzugter von 3 bis 5 µm aufgetragen wird.

6. Laminiertes Verpackungsmaterial (10) nach einem der vorhergehenden Ansprüche, **dadurch gekennzeichnet, dass** die andere Seite der Gassperrschicht (12), die der Kernschicht (11) abgewandt ist, an eine Schicht aus thermoplastischem heißsiegelbarem Polymer (15) mithilfe einer Zwischenschicht (16) aus haftendem Olefincopolymer gebunden ist.

7. Laminiertes Verpackungsmaterial (10) nach Anspruch 6, **dadurch gekennzeichnet, dass** die Gassperrschicht (12) zusammen mit den angrenzenden Schichten aus haftendem Polymer (14, 16) und thermoplastischem heißsiegelbaren Polymer (13, 15) auf die Kernschicht (11) koextrusionsbeschichtet ist.

8. Laminiertes Verpackungsmaterial (10) nach einem der Ansprüche 1 bis 7, **dadurch gekennzeichnet, dass** die andere Seite der Kernschicht (11), die der Sperrschicht (12) abgewandt ist, auch mit einer äußeren Schicht (17) aus einem thermoplastischen heißsiegelbaren Polymer beschichtet ist.

9. Verfahren zur Herstellung eines laminierten Verpackungsmaterials (10) nach einem der vorhergehenden Ansprüche, umfassend Koextrusionsbeschichten der Sperrschicht (12) mit wenigstens einer dazwischenliegenden Bindeschicht (13, 14) auf die Kernschicht (11), so dass die aus dem Flüssigkristallpolymer bestehende Sperrschicht im Wesentlichen in eine Richtung ausgerichtet und in einer Menge von 2 bis etwa 10 µm aufgetragen wird.

10. Verfahren zur Herstellung des laminierten Verpackungsmaterials (10) nach einem der vorhergehenden Ansprüche, umfassend Koextrusionsbeschichten der Sperrschicht (12) mit den angrenzenden Schichten aus haftendem Polymer (14, 16) und thermoplastischem heißsiegelbaren Polymer (13, 15) auf die Kernschicht (11), so dass das LCP-Polymer im Wesentlichen in nur eine Richtung ausgerichtet und in einer Menge von 2 bis etwa 10 µm aufgetragen wird.

11. Verfahren nach Anspruch 9 oder 10, wobei das Extrusionswerkzeug (32) eine Art Kleiderbügelmatrize mit fester Breite oder/und eine innen begrenzte Matrize umfasst und mit einem Vorschubblock ausgestattet ist.

12. Verfahren nach einem der Ansprüche 9 - 11, wobei der Druck der LCP-Schmelze in dem Extrusionswerkzeug (32) mithilfe einer Schmelzpumpe (38) zusammen mit dem LCP-Extruder konstant gehalten wird.

13. Verfahren nach einem der Ansprüche 9 - 12, wobei die Sperrschicht (12) bis zu einer Dicke von 3 bis 7 µm extrudiert wird.

14. Verfahren nach einem der Ansprüche 9 - 13, umfassend die Schritte: Koextrudieren einer mehrlagigen Vorfolie (24), die die LCP-Sperrschicht (12) enthält, Vorbehandeln (21) der Oberfläche des Kernschichtsubstrats (11), um sie zu aktivieren, wahlweises Vorbehandeln der Kontaktfläche der mehrlagigen Folie, und anschließendes Aneinanderhaften der vorbehandelten Oberflächen durch Ausüben von Druck.

15. Verfahren nach Anspruch 14, wobei das Kernschichtsubstrat (11) einer Oberflächenaktivierungsbehandlung unterzogen wird und zwar mithilfe eines trockenen, auf einem Vakuum basierenden Verfahrens zur Oberflächenaktivierung, wie beispielsweise der Plasma-, Korona- oder Flammenbehandlung, und wobei, wahlweise, die Kernschichtkontaktseite der mehrlagigen Folie mit Ozon behandelt wird.

16. Verfahren zur Herstellung eines laminierten Verpackungsmaterials (10), wobei das laminierte Material eine Kernschicht (11) und eine aus einem Flüssigkristallpolymer bestehende Sperrschicht (12) enthält, umfassend die Schritte des Koextrusionsbeschichtens (22) einer flachen Schicht aus LCP zusammen mit weiteren Polymerschichten auf eine Substratbahn, die diese Kernschicht enthält, mithilfe eines Extrusionswerkzeugs (32), das eine Art Kleiderbügelmatrize mit fester Breite oder/und eine innen begrenzte Matrize umfasst, so dass die LCP-Schicht im Wesentlichen in eine Richtung gedehnt wird.

17. Verfahren nach Anspruch 16, wobei die flache, aus LCP bestehende Schicht eine Dicke von 2 bis 10 µm hat, die Bahngeschwindigkeit mindestens 300 m/Minute beträgt, der Luftspalt zwischen dem Matrizenspaltaustritt und der Substratbahnoberfläche weniger als 200 mm beträgt und das Verhältnis zwischen der Viskosität des LCP und den Polymeren der Schichten, die mit der LCP-Schicht koextrudiert sind, von 1:4 bis 4:1 lautet, der Druck der LCP-Schmelze in dem Extrusionswerkzeug (32) mithilfe einer Schmelzpumpe (38) zusammen mit dem LCP-Extruder konstant gehalten wird.

18. Formstabiler Verpackungsbehälter (30) zum sterilen Lagern oder zum Lagern bei längerer Haltbarkeit von flüssigen, sauerstoffgasempfindlichen Nahrungsmitteln, der durch Falten und versiegeln eines blatt- oder bahnförmigen Rohlings aus laminiertem Verpackungsmaterial (10), gemäß einem der Ansprüche 1 bis 8, gebildet werden kann.

19. Befüllter Verpackungsbehälter zum sterilen Lagern oder zum Lagern bei längerer Haltbarkeit von flüssigen, sauerstoffgasempfindlichen Lebensmitteln, der durch Falten und Ultraschallheißsiegeln eines blatt- oder bahnförmigen Rohlings aus laminiertem Verpackungsmaterial (10), gemäß einem der Ansprüche 1 bis 8, gebildet werden kann.

## Revendications

1. Matériau d'emballage stratifié (10) pour l'emballage de produits alimentaires liquides, comprenant une couche d'âme (11) en papier ou carton et une couche de barrière aux gaz (12) consistant en un polymère de type cristal - liquide (LCP), **caractérisé en ce que** la couche de barrière aux gaz (12) de LCP est appliquée en une quantité de 2 à 10 µm et elle est appliquée par coextrusion en même temps qu'au moins une couche de liaison intermédiaire (13, 14) sur la couche d'âme (11), d'une manière telle que le polymère de type cristal - liquide de la couche de barrière est orienté sensiblement dans une seule direction.

2. Matériau d'emballage stratifié (10) selon la revendication 1, **caractérisé en ce que** la couche de liaison intermédiaire (14), adjacente à la couche de barrière (12), comprend un copolymère d'oléfine adhésif contenant des unités monomères de glycidyl méthacrylate.

3. Matériau d'emballage stratifié (10) selon la revendication 2, **caractérisé en ce que** le copolymère d'oléfines adhésif est un terpolymère aléatoire d'éthylène, ester acrylique et glycidyl méthacrylate

4. Matériau d'emballage stratifié (10) selon une quelconque des revendications 1 à 3, **caractérisé en ce que** le dit LCP est un copolymère aromatique basé sur l'acide p-hydroxy benzoïque et l'acide hydroxy naphtoïque (PHB / HNA) ou un copolymère de polyéthylène téréphtalate et d'acide p-hydroxy benzoïque.

5. Matériau d'emballage stratifié (10) selon une quelconque des revendications précédentes, **caractérisé en ce que** la couche de barrière (12) est appliquée en une quantité de 3 à 7 µm, et plus avantageusement de 3 à 5 µm.

6. Matériau d'emballage stratifié (10) selon une quelconque des revendications précédentes, **caractérisé en ce que** l'autre face de la couche de barrière aux gaz (12) tournée à l'opposé de la couche d'âme (11) est liée à une couche d'un polymère thermosoudable thermoplastique (15) au moyen d'une couche intermédiaire (16) de copolymère d'oléfines adhésif.

7. Matériau d'emballage stratifié (10) selon la revendication 6, **caractérisé en ce que** la couche de barrière aux gaz (12) est appliquée par coextrusion en même temps que les couches adjacentes de polymère adhésif (14, 16) et de polymère thermosoudable thermoplastique (13, 15) sur la couche d'âme (11).

8. Matériau d'emballage stratifié (10) selon une quelconque des revendications 1 à 3, **caractérisé en ce que** l'autre face de la couche d'âme (11) tournée à l'opposé de la couche de barrière (12) est également revêtue avec une couche extérieure (17) d'un polymère thermoplastique thermosoudable.

9. Procédé de fabrication du matériau d'emballage stratifié (10) comme défini dans une quelconque des revendications précédentes, comprenant l'application par coextrusion de la couche de barrière (12) en même temps qu'au moins une couche de liaison intermédiaire (13, 14) sur la couche d'âme (11) d'une manière telle que la couche de barrière constituée du polymère de type cristal - liquide est orientée sensiblement dans une seule direction et est appliquée en une quantité de 2 à 10 µm environ.

10. Procédé de fabrication du matériau d'emballage stratifié (10) comme défini dans une quelconque des revendications précédentes, comprenant l'application par coextrusion de la couche de barrière (12) en même temps que les couches adjacentes de polymère adhésif (14, 16) et de polymère thermosoudable thermoplastique (13, 15) sur la couche d'âme (11) d'une manière telle que le polymère LCP est orienté sensiblement dans une seule direction et est appliqué en une quantité de 2 à 10 µm environ.

11. Procédé selon la revendication 9 ou 10, dans lequel la filière d'extrusion (32) est du type de filière suspendue pour revêtement de largeur fixe et/ou une filière rainurée intérieurement, pourvue d'un bloc d'alimentation.

12. Procédé selon une quelconque des revendications 9 à 11, dans lequel la pression du LCP à l'état fondu dans la filière d'extrusion (32) est maintenue constante au moyen d'une pompe de matière fondue (38) en combinaison avec l'extrudeuse de LCP.

13. Procédé selon une quelconque des revendications 9 à 12, dans lequel la couche de barrière (12) est extrudée à une épaisseur de 3 à 7 µm.

14. Procédé selon une quelconque des revendications 9 à 13, comprenant les étapes de coextrusion d'un préfilm multicouche (24) incluant la couche de barrière de LCP (12), de prétraitement (21) de la surface du substrat de couche d'âme (11) afin de l'activer, de prétraitement optionnel de la surface de contact du film multicouche, puis d'application de pression afin d'amener les surfaces prétraitées à adhérer l'une à l'autre.

15. Procédé selon la revendication 14, dans lequel le substrat de couche d'âme (11) est soumis à un traitement d'activation de surface par une méthode d'activation de surface à base de vide à sec, par exemple traitement par plasma, effluve ou flamme, et, optionnellement, le côté de contact de couche d'âme du film multicouche est traité à l'ozone.

16. Procédé de fabrication d'un matériau stratifié d'emballage (10), le matériau stratifié comprenant une couche d'âme (11) et une couche de barrière (12) consistant en un polymère de type cristal - liquide, comprenant les étapes d'application par coextrusion (22) d'une couche plane consistant en LCP en même temps que d'autres couches de polymère sur une bande de substrat incluant la dite couche d'âme, au moyen d'une filière d'extrusion (32) du type à filière suspendue pour revêtement de largeur fixe et/ou d'une filière intérieurement rainurée, de sorte que la couche de LCP soit étirée sensiblement dans une seule direction.

17. Procédé selon la revendication 16, dans lequel la couche plane en LCP a une épaisseur de 2 à 10 µm, la vitesse de la bande est au moins de 300 m/min, l'intervalle d'air entre la sortie de l'intervalle de filière et la surface de bande de substrat est inférieur à 200 mm et le rapport entre la viscosité du LCP et celle des polymères des couches coextrudées en même temps que la couche de LCP est de 1:4 à 4:1, la pression du LCP à l'état fondu dans la filière d'extrusion (32) est maintenue constante au moyen d'une pompe de matière fondue (38) associée à l'extrudeuse de LCP.

18. Récipient d'emballage de configuration stable (30) pour le stockage aseptique ou le stockage de longue durée de conservation de produits alimentaires liquides sensibles à l'oxygène gazeux, qui peut être obtenu par pliage et soudage d'une ébauche en feuille ou en bande d'un matériau d'emballage stratifié (10) selon une quelconque des revendications 1 à 8.

19. Récipient d'emballage rempli pour le stockage aseptique ou le stockage de longue durée de conservation de produits alimentaires liquides sensibles à l'oxygène gazeux, qui peut être obtenu par pliage et thermosoudage aux ultrasons d'une ébauche en feuille ou en bande d'un matériau d'emballage stratifié (10) selon une quelconque des revendications 1 à 8.
